Europäisches Patentamt

**European Patent Office**

Office européen des brevets

(11) Publication number: **0 186 220**
**B1**

(12) **EUROPEAN PATENT SPECIFICATION**

(45) Date of publication of patent specification: 26.04.89

(51) Int. Cl.⁴: **B 64 D 29/02,** B 64 D 27/18

(21) Application number: 85201285.5

(22) Date of filing: 08.08.85

(54) Nacelle and wing assembly.

(30) Priority: 28.12.84 US 687200

(43) Date of publication of application:
02.07.86 Bulletin 86/27

(45) Publication of the grant of the patent:
26.04.89 Bulletin 89/17

(84) Designated Contracting States:
DE FR GB IT NL

(56) References cited:
EP-A-0 111 785
US-A-4 314 681
US-A-4 449 683

(73) Proprietor: **THE BOEING COMPANY**
**Younker Building (2nd Floor) 3900 E. Valley**
**Highway**
**Renton Washington 98055 (US)**

(72) Inventor: **Goldhammer, Mark I.**
**4801 152nd Place SE.**
**Bellevue Washington 98006 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

EP 0 186 220 B1

Courier Press, Leamington Spa, England.

## Description

The present invention relates to a nacelle/wing combination according to the preamble of claim 1.

Such a combination is known from US 4,314,681.

An object of the present invention is to mount a nacelle including an engine closer to a wing at the same time minimizing nacelle installation drag, relative to this known nacelle/wing combination.

Such an object is achieved by the nacelle/wing combination according to the characterizing part of claim 1.

Most recent designs for large jet powered subsonic aircraft have pod-mounted engines located beneath the wing. It is desirable to mount these engines as closely as possible to the wing lower surface in order to minimize the structural weight and wetted area of the strut supporting the engine. Another significant advantage in mounting the engines more closely to the wing is that this permits reducing the length of the landing gear necessary to keep the engines sufficiently far from the ground. However, if the engines are mounted too closely to the wing, aerodynamic interference can occur between the wing, the engine nacelle, and the strut that supports the engine.

A search of the patent literature has revealed a number of U.S. patents. These are noted below.

U.S. 4,314,681, Kutney, discusses the problem of aerodynamic drag that is created by mounting an engine nacelle to a wing. To alleviate this problem, the patent describes a design where there is an add-on fairing to produce certain desired aerodynamic effects. In one arrangement, the contour of the pylon is modified. In another arrangement, there is provided a "bump" at the intersection of the wing and the pylon.

U.S. 3,533,237, Ravone, also addresses the problem of nacelle installation drag. This patent describes a nacelle configuration which is characterized by external wall surfaces which converge in a downstream direction at small angles.

U.S. 3,952,971, Whitcomb, relates generally to a wing configuration where there is described certain desired lower surface pressure distributions where the flow at the lower surface accelerates rapidly to a high subsonic velocity in the forward half of the airfoil. This patent does not deal directly with the problem of nacelle installation drag.

A number of other patents which were disclosed in the search appear to be no more relevant, and quite likely less relevant, than the patents noted above. Accordingly, these are being listed without any discussion of the same: U.S. 2,488,991, Stalker; U.S. 2,968,209, Kerry; U.S. 3,129,906, Peterson; U.S. 3,199,813, Roper; U.S. 3,614,028, Kleckner; U.S. 3,744,745, Kerker; U.S. 3,960,345, Lippert, Jr.; U.S. 4,050,651, Neal; U.S. 4,171,786, Krenz; U.S. 4,311,289, Finch; and U.S. 4,318,516, Cole.

## Summary of the invention

It is an object of the present invention to provide a nacelle/wing combination where the nacelle can be mounted in close proximity to the wing without creating excessive nacelle installation drag. The wing of this nacelle/wing combination has a leading edge, a trailing edge, an upper surface and a lower surface. The wing has a spanwise axis and a chord line which is a line of maximum distance extending from the trailing edge to the leading edge. The wing has a depth dimension which is measured between the upper and lower surface along a line normal to the camber line of the wing.

The nacelle of the nacelle/wing combination is mounted to the wing at a nacelle location and contains a jet engine for propulsion which creates exhaust flow under the wing. The nacelle has an outer circumferential surface which has a rear circumferential edge portion defining an exhaust flow region. This exhaust flow region is a generally cylindrically shaped space having a cross-sectional configuration corresponding to the circumferential edge portion of the nacelle and extending rearwardly from the circumferential edge portion in alignment with a path along which engine exhaust from the nacelle flows.

The nacelle has a critical upper surface area which comprises an upper surface portion of the nacelle and an upper surface portion of the exhaust flow region. (The term "critical" is not used in the aerodynamic sense of denoting flow at the speed of sound, but rather to indicate surface areas which are significant to the present invention.) The nacelle is positioned relative to the wing so that the critical upper surface area of the nacelle is below the lower surface of the wing.

The rear edge portion of the nacelle is positioned no further rearwardly than a location that is rearward of the leading edge by a distance equal to 30% of chord length at the nacelle location.

The wing has a nacelle critical surface region which is a wing lower surface portion at the nacelle location. The critical surface region is contoured relative to the depth dimension so that peak low pressure along said critical surface region occurs at a location rearward of the leading edge at a distance equal to at least 40% of chord length.

With the arrangement described above, the nacelle can be positioned with the critical upper surface area of the nacelle being relatively close to the wing without creating excessive nacelle installation drag.

The configuration of the wing is such in the preferred form that the maximum depth dimension of the wing surface at the nacelle location is located between about 40% chord length and 60% chord length rearwardly of the leading edge at the nacelle location. Desirably, this maximum depth is located between about 45% chord length and 50% chord length rearwardly of the leading edge at the nacelle location.

In the present invention, a nacelle/wing combination is provided as described above. The airflow that passes beneath the wing creates peak low pressures at a distance at least 40% rearwardly of the chord length at the nacelle location.

In the preferred form, the rear edge portion of the nacelle is positioned no further forward of the wing than about 0.2 chord length of the wing at the nacelle location. In a further preferred arrangement, the rear edge portion of the nacelle is positioned between zero to 0.2 chord length at the nacelle location forwardly of the wing leading edge.

Also, in the preferred form the nacelle is positioned so that the critical upper surface area is spaced below the lower surface of the wing no greater than about 0.2 chord length, and at least about 0.05 chord length.

Other features of the present invention will become apparent from the following detailed description.

Brief description of drawing

Figure 1 is a side elevational view of a nacelle and wing combination, with the wing being shown in section taken along the chordwise axis;

Figure 2 is a sectional view of only the wing of the present invention, with the section being taken parallel to the chordwise axis of the wing;

Figure 3 is a bottom plan view of a wing made in accordance with the present invention, illustrating the pressure distribution over the lower surface of the wing; and

Figure 4 is a graph illustrating the curvature of the lower surface of the wing at the nacelle location.

Description of the preferred embodiment

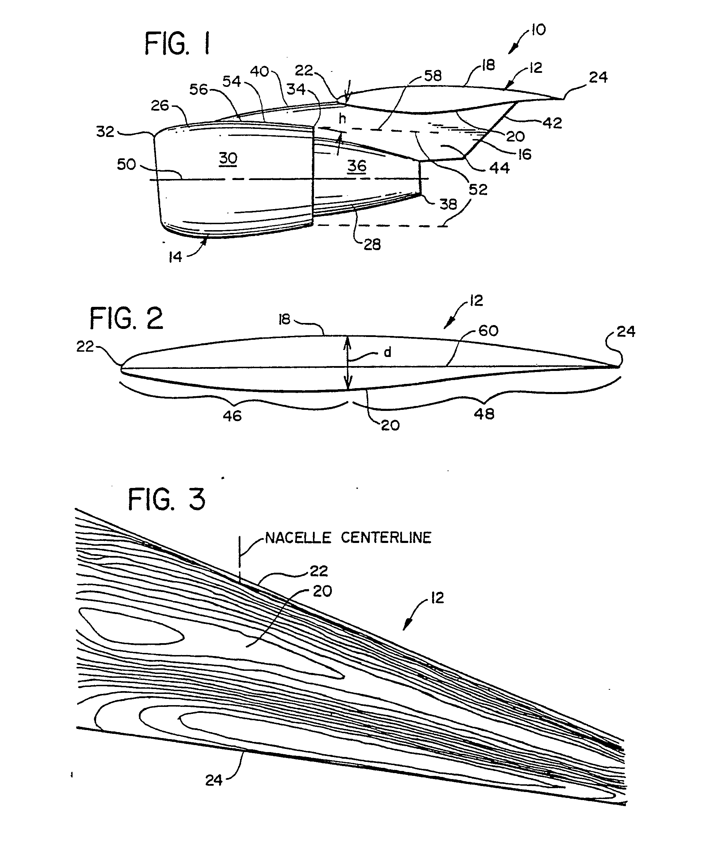

In Figure 1, there is shown a nacelle/wing combination 10, comprising a transonic wing 12, an engine nacelle 14, and a strut 16 by which the nacelle 14 is mounted to the wing 12. The wing 12 has an upper surface 18, a lower surface 20, a leading edge 22 and a trailing edge 24. The wing 20 is a transonic wing which is a wing where significant portions of the flow over the wing are supersonic.

The nacelle 14 shown herein is designed for a fan jet engine which is or may be conventional, and the nacelle 14 comprises a fan cowl 26 and a core cowl 28. The fan cowl 26 has an outer circumferential surface 30, a forward circumferential lip 32 and a trailing circumferential edge 34. The core cowl 28 comprises a circumferential side wall 36 and an exhaust end 38. The primary jet flow exits from the exhaust end 38 of the core cowl 28, and the fan jet flow is emitted in an annular pattern from the rear end of the fan cowl 26.

The strut 16 is or may be of conventional design and has a forwardly sloping leading edge 40, a trailing edge 42, and two side surfaces, one of which is shown at 44.

A quite critical feature of the present invention is the configuration of the wing 12 relative to the positioning of nacelle 14. To explain this further, reference is now made to Figure 2. The precise contouring of the entire upper surface 18 of the upper wing 12 is not of itself critical to the present invention, and it will vary depending upon a variety of items. For example, the contouring of the upper surface 18 will depend on such things as the desired sweep and thickness of the wing, the desired cruise mach number and lift coefficient, and also the desired upper surface isobar and shock development patterns. However, the contouring of the wing upper surface is critical insofar as it affects the location of the maximum depth dimension of the wing 12.

Quite critical to the present invention is the contouring of the forward surface portion 46 of the wing lower surface 20. The contouring of the rear surface portion 48 of the lower surface 20 is not, in and of itself, critical to the present invention, but is arranged so as to be compatible with the contouring of the forward lower surface portion 46 and also the upper surface 18.

The contouring of the wing lower surface 20 is such that the lower wing surface pressure distribution in the vicinity of the nacelle attachment location is such that the peak suction pressures of the wing lower surface are, in comparison with conventional wing designs, far aft. More specifically, the peak suction pressures are at a location at least as far rearwardly from the wing leading edge 22 as 40% of the chord length at the location of the nacelle 14. The general range of the peak suction pressure is between about 40% to 60% of the chord length, measured rearwardly from the leading edge 22, and preferably between about 45% to 50%. Such a pressure distribution is illustrated in Figure 3 where it can be seen that the peak low pressure area at the location of the nacelle centerline is at a distance between 40% to 50% of chord length rearwardly from the wing leading edge 22.

Also, the location of the nacelle 14 relative to the wing 12 is quite significant in achieving the ends of the present invention. For purposes of description, the nacelle 14 can be considered to have a longitudinal center axis 50 which is quite close in alignment with the direction of the flow of the core engine exhaust and fan exhaust from the nacelle 14. Further, the nacelle 14 can be considered as providing an exhaust flow region (i.e. an exhaust plume) which is a generally cylindrically shaped space, indicated at 52, having a cross-sectional configuration corresponding to that of the circumferential rear edge portion 34 of the fan cowl 26. Further, the nacelle 14 can be considered as having a critical upper surface area collectively designated 54, which upper surface area 54 is made up of the upper surface portion 56 of the fan cowl 26, and also the upper surface portion 58 of the flow region 52.

In the particular embodiment shown herein, the fan cowl rear edge 34 is positioned a moderate distance forwardly of the wing leading edge 22, and the upper surface portion 56 of the fan cowl 26 is positioned so that the upper surface portion of the flow region 52 is moderately below the wing lower surface 20.

With the engine nacelle mounted in the location described generally above, it has been found that the nacelle/wing combination 10 operates quite effectively in lessening nacelle installation drag. It is believed that the following discussion provides a reasonable explanation of this improved performance. However, it is to be understood that regardless of the accuracy or completeness of the following explanation, it has been found through wind tunnel tests that the present invention does permit the engine nacelle 14 to be mounted in close proximity to the wing 12, while keeping nacelle installation drag at a relatively low level.

It is believed that the reason for this is as follows. The airflow which approaches the wing leading edge 22 and then passes below the leading edge and along the lower surface 20 is, because of the pressure distribution created by the contouring the wing lower surface 20, travelling at a relatively low velocity (in comparison with more conventional wings) just a short distance rearwardly of the wing leading edge 22, with this velocity increasing in a rearward direction to the area of peak suction pressures, after which the velocity of the airflow is reduced moderately. The effect of the nacelle 14 on the airflow is such that the air that flows between the nacelle 14 and the wing lower surface 20 becomes channelled in a relatively small flow area. This channelling of the airflow between the nacelle 14 and the wing 12 tends to cause a sharp increase in velocity, which in many prior art designs causes drag producing supersonic velocities in this area. However, because of the the pressure distribution created by the contouring of the wing lower surface 20 in accordance with the teachings of the present invention, since the velocity of the air passing beneath the leading edge is in the wing alone configuration at a relatively lower velocity, the resulting increase of velocity due to the channelling affect produced by the presence of the nacelle 14 does not cause the flow in this area to go supersonic. Thus, the nacelle 14 can be tucked more closely to the wing 12 than in earlier designs without causing excessive aerodynamic interference.

Of course, if the nacelle 14 is mounted at a distance quite far ahead of the wing leading edge 22, or if the nacelle 14 is positioned well below the wing lower surface 20, then the effect of nacelle installation drag is substantially less for even ·wings of conventional design, and accordingly, the advantages of the present invention become less significant. The general range of dimensions within which it is believed that the present invention produces quite beneficial results are as follows.

First, the trailing edge of the nacelle 14 which determines the outermost perimeter of the gaseous exhaust (which in the present embodiment is the circumferential rear edge 34 of the fan cowl 26) should be positioned, relative to the leading edge 22, at a distance forwardly of the leading edge no greater than about 0.2 chord length taken at the location of the nacelle 14, and no further rearwardly from the wing leading edge 22 than about 0.3 chord length taken at the location of the nacelle 14. Further, the vertical spacing between the wing lower surface 20 and the critical surface area 54 of the nacelle 14 should be no greater than about 0.2 chord length at the location of the nacelle 14, and desirably at least about 0.05 chord length. In any event, the nacelle 14 should not be placed so closely to the wing lower surface 20 that the engine exhaust scrubs the lower surface 20. This vertical displacement dimension is indicated as "h" in Figure 1, and is measured as the minimum distance 20 and the exhaust plume 52.

To describe now the configuration of the airfoil lower surface, reference is made to Figure 2. There is illustrated in Figure 2 a chord line 60 of the wing 12. This chord line 60 can be defined as the line of maximum distance extending from the trailing edge 24 to the leading edge 22. The wing 12 has a depth dimension (indicated at "d" in Figure 2) which is the distance between the upper and lower surfaces along a line normal to the camber line. In the preferred form, the maximum dimension d should occur at approximately mid-chord length. In general, this maximum depth dimension d would be located rearwardly from the leading edge 22 at a distance of 40% to 60% (desirably 45% to 50%) rearwardly of the leading edge 22.

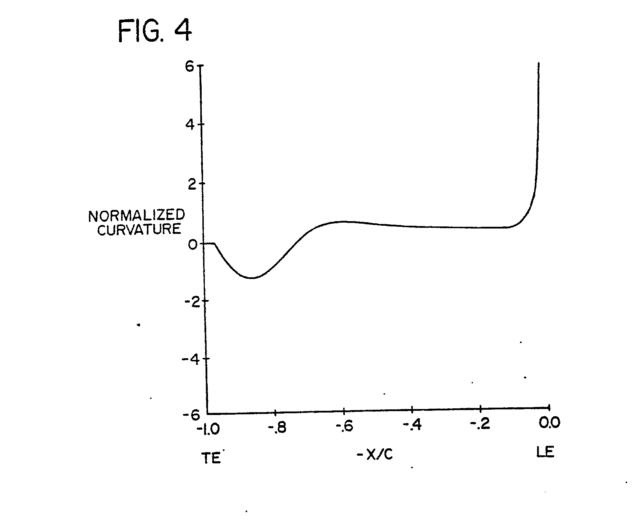

With reference to Figure 4, there is a graph illustrating the degree of curvature of the lower surface 20, with the curvature at the leading edge being indicated at the right hand of the graph, and curvature of the trailing edge being indicated at the left part of the graph. It can be seen that at the leading edge 20 the degree of curvature is quite sharp. However, the lower surface configuration has a relatively constant degree of curvature from a location at about one-tenth the distance rearwardly of the leading edge 22 to a distance of approximately 65% rearwardly of the leading edge 22. In the particular airfoil shown herein, the rear portion of the lower surface 20 has a concave curvature. It is to be understood, however, that this curvature of the rear part of the lower surface 20 could be modified to achieve other aerodynamic affects without having significant effect on the operation of the forward portion of the lower surface relative to achieving the ends of the present invention.

To demonstrate the benefits of the present invention, an airplane model was built having a nacelle/wing combination as shown in Figure 1. The wing was a swept transonic wing, and the chord length of the wing at the location of the nacelle was 0.22 m (8.75 inches). The nacelle was a nacelle for a fan jet engine having a fan cowl and a core cowl. The length of the fan cowl was 0.16 m (6.4 inches) and the distance from the rear edge of the fan cowl to the rear edge of the core cowl was 0.04 m (1.6 inches). The rear edge of the fan cowl was located forwardly of the leading edge of the airfoil at the nacelle location by a distance of 0.015 m (0.6 inch). The top surface of the nacelle (as indicated by the dimension "h" described above) was 0.013 m (0.5 inch). The fan exhaust and core engine exhaust were simulated by in accordance with conventional wind tunnel techniques.

The wing was shaped as described above, and the lower surface of the wing had the curve characteristics as indicated in Figure 4. The maximum depth dimension of the wing was located at 45% chord length rearwardly of the leading edge. The results of this test indicated that the nacelle could be mounted beneath the wing with no increase in drag over and above the drag of the wing and the nacelle/strut measured separately. In other words, the nacelle was installed beneath the wing with no aerodynamic interference drag.

## Claims

1. A nacelle/wing combination, comprising:

a. a wing (12) having a leading edge (22), a trailing edge (24), an upper surface (18) and a lower surface (20), said wing having a spanwise axis and a chord line which is a line of maximum distance extending from the trailing edge to the leading edge, said wing having a depth dimension measured between the upper and lower surface on a line normal to camber line of the wing;

b. a nacelle (14) mounted to said wing at a nacelle location and containing a jet engine for propulsion which creates an exhaust flow, said nacelle having an outer circumferential surface which has a rear circumferential edge portion (34) defining an exhaust flow region (52) which is a generally cylindrically shaped space having a cross-sectional configuration corresponding to said rear circumferential edge portion and extending rearwardly from said rear circumferential edge portion in alignment with a path along which engine exhaust from said nacelle flows;

c. said nacelle having a critical upper surface area (54) which comprises an upper surface portion of said nacelle and an upper surface portion of said exhaust flow region, said nacelle being postioned relative to the wing so that the critical upper surface area of the nacelle is below the lower surface of the wing;

d. said rear circumferential edge portion being positioned no further rearwardly than a location that is rearward of the leading edge by a distance equal to 30% of chord length at the nacelle location; characterized in that

e. said wing (12) having a nacelle critical surface region which is a wing lower surface portion (20) at the nacelle location, said critical surface region being contoured relative to the depth dimension so that peak low pressure along said critical surface region occurs at a location rearward of said wing leading edge by a distance equal to at least 40% of chord length;

f. said wing lower surface portion having an approximately constant degree of curvature from a location at about one tenth of the chord length rearwardly of the wing leading edge to a location at approximately 65% rearwardly of the wing leading edge (22);

whereby said nacelle (14) can be positioned with the critical upper surface area of the nacelle being relatively close to said wing without creating excessive nacelle installation drag.

2. The combination as recited in Claim 1, wherein said rear circumferential edge portion (34) of the nacelle (14) is positioned between zero to 0.2 chord length at the nacelle location forwardly of the wing leading edge (22).

3. The combination as recited in Claim 1 or 2, wherein said nacelle (14) is positioned so that said critical upper surface area (54) is spaced below said wing lower surface (20) no greater than about 0.2 chord length.

4. The combination as recited in Claim 3, wherein said critical upper surface area (54) is spaced below the lower surface (20) of the wing just rearwardly of the wing leading edge (22) by a distance of at least about 0.05 chord length at the nacelle location.

5. The combination as recited in any one of the Claims 1—4, there is a maximum depth dimension of the wing (12) at said nacelle location, said maximum depth dimension being located between about 40% chord length and 60% chord length rearwardly of said wing leading edge (22) at said nacelle location.

6. The combination as recited in Claim 5, wherein said maximum depth dimension is located between about 45% chord length and 50% chord length rearwardly of said wing leading edge (22) at said nacelle location.

7. The combination as recited in any one of the preceding claims, wherein said critical surface area is spaced below the lower surface (20) of the wing just rearwardly of the wing leading edge (22) by a distance of at least about 0.05 chord length at the nacelle location.

8. A nacelle/wing combination according to any one of the preceding claims, wherein said peak low pressure along said critical surface region occurs by means of a maximum depth dimension at said critical surface region occurring at said same location rearwardly of said leading edge.

## Patentansprüche

1. Gondel-/Flügel-Kombination, umfassend:

a. einen Flügel (12), der eine Profilvorderkante (22), eine Profilhinterkante (24), eine obere Oberfläche (18) und eine untere Oberfläche (20) hat, wobei der Flügel eine spannweitenweise Achse und eine Sehenlinie hat, die eine Linie von maximalen Abstand ist, welche sich von der Profilhinterkante zu der Profilvorderkante erstreckt, wobei der Flügel eine Tiefendimension, gemessen zwischen der oberen und unteren Oberfläche auf einer Linie, die senkrecht zu der Wölbungslinie des Flügels ist, hat;

b. eine Gondel (14), die an dem Flügel an einem Gondelort angebracht ist und ein Strahltriebwerk für Düsenantrieb enthält, welches eine Abgasströmung erzeugt, wobei die Gondel eine äußere Umfangsoberfläche hat, die einen rückwärtigen Umfangsrandteil (34) hat, der einen Abgasströmungsbereich (52) begrenzt, welcher ein generell zylindrisch geformter Raum ist, der eine Querschnittskonfiguration hat, die dem rückwärtigen Umfangsrandteil entspricht und sich rückwärts von dem rückwärtigen Umfangsrandteil in Fluchtung mit einem Weg erstreckt, entlang welchem Triebwerksabgas von der Gondel strömt;

c. wobei die Gondel einen kritischen oberen Oberflächenbereich (54) hat, der einen oberen Oberflächenteil der Gondel und einen oberen Oberflächtenteil des Abgasströmungsbereichs umfaßt, wobei die Gondel relativ zu dem Flügel so positioniert ist, daß der kritische obere Oberflächenbereich der Gondel unterhalb der unteren Oberfläche des Flügels ist;

d. wobei der rückwärtige Umfangsrandteil nicht weiter rückwärts als ein Ort positioniert ist, der um eine Entfernung rückwärts von der Profilvorderkante ist, die gleich 30% der Sehnenlänge an dem Gondelort ist;

dadurch gekennzeichnet, daß

e. der Flügel (12) einen gondelkritischen Oberflächenbereich hat, der ein unterer Flügeloberflächenteil (20) an dem Gondelort ist, wobei der kritische Oberflächenbereich relativ zu der Tiefendimension so konturiert ist, daß Spitzenniedrigdruck entlang dem kritischen Oberflächenbereich an einer Stelle auftritt, die in einer Entfernung rückwärts von der Flügel-Profilvorderkante ist, welche wenigstens gleich 40% der Sehnenlänge ist;

f. der untere Oberflächenteil des Flügels einen angenähert konstanten Krümmungsgrad von einer Stelle bei etwa einem Zehntel der Sehnenlänge rückwärts von der Flügel-Profilvorderkante zu einer Stelle bei angenähert 65% rückwärts von der Flügel-Profilvorderkante (22) hat;

wodurch die Gondel (14) so positioniert sein kann, daß der kritische obere Oberlfächenbereich der Gondel relativ dicht bei dem Flügel ist, ohne daß übermäßiger Gondelinstallationsströmungswiderstand erzeugt wird.

2. Kombination nach Anspruch 1, worin der rückwärtige Umfangsrandteil (34) der Gondel (14) zwischen Null bis 0.2 Sehnenlänge an dem Gondelort vorwärts von der Flügel-Profilvorderkante (22) positioniert ist.

3. Kombination nach Anspruch 1 oder 2, worin die Gondel (14) so positioniert ist, daß der kritische obere Oberflächenbereich (54) in einem Abstand unterhalb der unteren Oberfläche (20) des Flügels von nicht mehr als etwa 0,2 Sehnenlänge angeordnet ist.

4. Kombination nach Anspruch 3, worin der kritische obere Oberflächenbereich (54) unterhalb der unteren Oberfläche (20) des Flügels gerade rückwärts von der Flügel-Profilvorderkante (22) um eine Entfernung von wenigstens etwa 0,05 Sehnenlänge an dem Zellenort im Abstand angeordnet ist.

5. Kombination nach irgendeinem der Ansprüche 1 bis 4, wobei eine maximale Tiefendimension des Flügels (12) an dem Gondelort vorhanden ist, wobei sich die maximale Tiefendimension zwischen etwa 40% Sehnenlänge und 60% Sehnenlänge rückwärts von der Flügel-Profilvorderkante (22) an dem Gondelort befindet.

6. Kombination nach Anspruch 5, worin sich die maximale Tiefendimension zwischen etwa 45% Sehnenlänge und 50% Sehnenlänge rückwärts von der Flügel-Profilvorderkante (22) an dem Gondelort befindet.

7. Kombination nach irgendeinem der vorhergehenden Ansprüche, worin der kritische Oberflächenbereich unterhalb der unteren Oberfläche (20) des Flügels gerade rückwärts von der Flügel-Profilvorderkante (22) um eine Entfernung von wenigstens etwa 0,05 Sehnenlänge an dem Gondelort im Abstand angeordnet ist.

8. Gondel-/Flügel-Kombination nach irgendeinem der vorhergehenden Ansprüche, worin der Spitzenniederdruck entlang dem kritischen Oberflächenbereich mittels einer maximalen Tiefendimension an dem kritischen Oberflächenbereich auftritt, welcher an dem selben Ort rückwärts von der Profilvorderkante auftritt.

**Revendications**

1. Combinaison d'une nacelle et d'une aile, caractérisée en ce qu'elle comprend:

a. une aile (12) ayant un bord d'attaque (22), un bord de fuite (24), une surface supérieure (18) et une surface inférieure (20), l'aile ayant un axe dans la direction de l'envergure et un axe dans la direction de la corde, la corde étant le segment de droite de plus grande dimension allant du bord de fuite au bord d'attaque, l'aile ayant une épaisseur, mesurée entre la surface supérieure et la surface inférieure suivant une droite perpendiculaire à la cambrure de l'aile.

b. une nacelle (14) montée sur l'aile à un emplacement de nacelle et contenant un réacteur de propulsion qui crée un courant évacué, la nacelle ayant une surface circonférentielle externe qui a une partie de bord circonférentiel arrière (34) qui délimite un région (52) de courant évacué qui constitue un espace de forme générale cylindrique dont la configuration en coupe correspond à la partie du bord circonférentiel arrière et disposée en arrière de la partie de bord circonférentiel arrière dans l'alignement du trajet le long duquel les gaz évacués par le réacteur de la nacelle s'écoulent,

c. la nacelle ayant une zone critique de surface supérieure (54) qui comporte une partie de surface supérieure de la nacelle et une partie de surface supérieure de la région d'écoulement des gaz évacués, la nacelle étant placée par rapport à l'aile de manière que la zone critique de surface supérieure de la nacelle se trouve au-dessous de la surface inférieure de l'aile,

d. la partie de bord circonférentiel arrière étant disposée plus en arrière qu'un emplacement qui se trouve à une distance égale à 30% de la longueur de la corde, à l'emplacement de la nacelle, en arrière du bord d'attaque, caractérisée en ce que:

e. l'aile (12) a une région critique de surface de nacelle qui est une partie (20) de surface inférieure d'aile à l'emplacement de la nacelle, cette région de surface critique ayant un profil, dans le sens de l'épaisseur, tel que la faible pression minimale le long de la région de surface critique se trouve à un emplacement qui est à une distance d'au moins 40% de la longueur de la corde en arrière du bord d'attaque de l'aile, et

f. la partie de surface inférieure d'aile a approximativement un degré constant de courbure d'un emplacement qui se trouve à peu près au dixième de la longueur de la corde en arrière du bord d'attaque de l'aile, à un emplacement qui se trouve à 65% environ en arrière du bord d'attaque (22) de l'aile,

si bien que la nacelle (14) peut être disposée d'une manière telle que la zone critique de surface supérieure de la nacelle est relativement proche de l'aile sans création d'une traînée excessive due à l'installation de la nacelle.

2. Combinaison selon la revendication 1, dans laquelle la partie du bord circonférentiel arrière (34) de la nacelle (14) est placée à une distance comprise entre 0 et 0,2 fois la longueur de la corde, à l'emplacement de la nacelle, en avant du bord d'attaque (22) de l'aile.

3. Combinaison selon la revendication 1 ou 2, dans laquelle la nacelle (14) est disposée de manière que la zone critique de surface supérieure (54) se trouve au-dessous de la surface inférieure (20) de l'aile à une distance qui ne dépasse pas 0,2 longueur de la corde environ.

4. Combinaison selon la revendication 3, dans laquelle la zone critique de surface supérieure (54) est placée au-dessous de la surface inférieure (20) de l'aile, juste en arrière du bord d'attaque (22) de l'aile, à une distance au moins égale à 0,05 longueur de la corde environ, à l'emplacement de la nacelle.

5. Combinaison selon l'une quelconque des revendications 1 à 4, ayant une épaisseur maximale d'aile (12) à l'emplacement de la nacelle, l'épaisseur maximale se trouvant à une distance comprise entre 40 et 60% de la longueur de la corde environ en arrière du bord d'attaque (22) de l'aile à l'emplacement de la nacelle.

6. Combinaison selon la revendication 5, dans laquelle l'épaisseur maximale est placée à un endroit compris entre environ 45 et 50% de la longueur de la corde en arrière du bord d'attaque (22) de l'aile à l'emplacement de la nacelle.

7. Combinaison selon l'une quelconque des revendications précédentes, dans laquelle la zone critique de surface est placée au-dessous de la surface inférieure (20) de l'aile juste en arrière du bord d'attaque (22) de l'aile, à une distance au moins égale à 0,05 longueur de la corde environ à l'emplacement de la nacelle.

8. Combinaison d'une nacelle et d'une aile selon l'une quelconque des revendications précédentes, dans laquelle la faible pression minimale le long de la région critique de surface est obtenue parce que la partie d'épaisseur maximale dans la région critique de surface se trouve au même emplacement en arrière du bord d'attaque.

FIG. 1

FIG. 2

FIG. 3

NACELLE CENTERLINE

FIG. 4